(19) Europäisches Patentamt
European Patent Office
Office européen des brevets

(11) **EP 1 535 767 B1**

(12) **EUROPEAN PATENT SPECIFICATION**

(45) Date of publication and mention
of the grant of the patent:
**20.08.2008 Bulletin 2008/34**

(51) Int Cl.:
***B60G 17/015*** *(2006.01)*

(21) Application number: **04028155.2**

(22) Date of filing: **26.11.2004**

(54) **Electronically-controlled suspension apparatus and damping force control method**

Elektronisch geregelte Radaufhängung und Methode zur Dämpfkraftregelung

Suspension à commande électronique et procédé de commande de force d'amortissement

(84) Designated Contracting States:
**DE FR GB IT**

(30) Priority: **26.11.2003 KR 2003084378**

(43) Date of publication of application:
**01.06.2005 Bulletin 2005/22**

(73) Proprietor: **Mando Corporation
Pyungtaek-si,
Kyonggi-do 451-821 (KR)**

(72) Inventor: **Wanil,Kim c/o Mando Corporation
Pyungtaek-si
Kyonggi-do 451-821 (KR)**

(74) Representative: **von Samson-Himmelstjerna,
Friedrich et al
SAMSON & PARTNER
Widenmayerstrasse 5
80538 München (DE)**

(56) References cited:
**EP-A- 0 341 883     EP-A- 0 499 790
EP-A- 0 566 091     US-A- 5 199 737
US-A- 5 979 885     US-A1- 2003 160 369**

**Description**

The present invention relates to an electronically-controlled suspension apparatus and damping force control method; and more particularly, to an electronically-controlled suspension apparatus and damping force control method, which is capable of improving ride comfort and steering stability of a vehicle by controlling a damping force of a variable damper using not only a vertical speed of a vehicle body but also a damper speed of the variable damper.

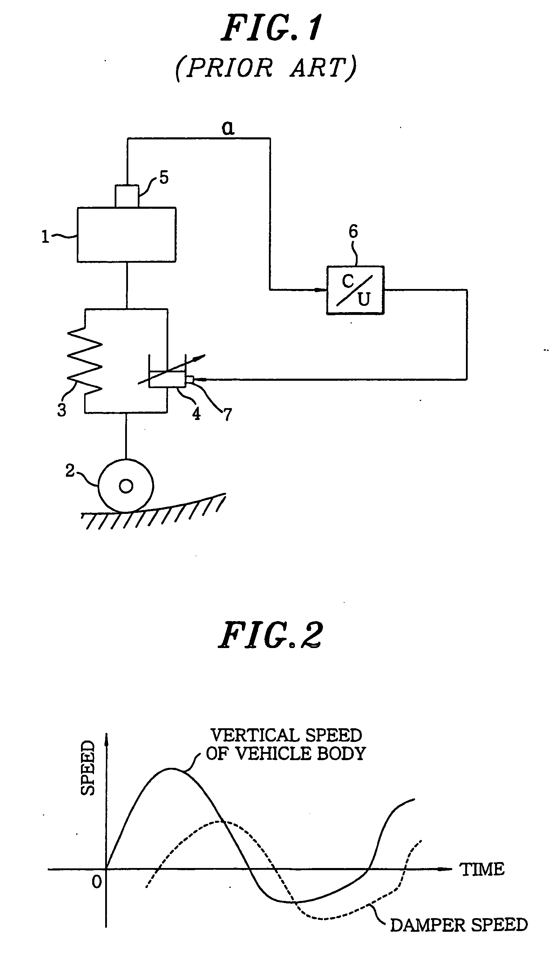

Referring to Fig. 1, there is presented a block diagram of a conventional electronically-controlled suspension apparatus. Fig. 2 displays graphs indicating a vertical speed of a vehicle body varying with time and a damper speed varying with time, respectively.

As shown in Fig. 1, the conventional electronically-controlled suspension apparatus includes a variable damper 4 installed between a vehicle body 1 and a wheel 2 (or wheel axle). A spring 3 is connected in parallel to the variable damper 4 at a location between the vehicle body 1 and the wheel 2, so that the spring 3 as well as the variable damper 4 supports the vehicle body 1. The conventional electronically-controlled suspension apparatus includes a road surface condition detector 5 mounted to the vehicle body 1 to provide a controller 6 with a piece of information about judging road surface conditions. The road surface condition detector 5 is generally constituted by a vertical acceleration sensor for detecting a vertical acceleration of the vehicle body 1 and generating a vertical acceleration signal $\alpha$. The piece of information for judging road surface conditions, for example, irregularity or roughness of a road surface, can be obtained by using amplitudes and frequencies of the vertical acceleration signal $\alpha$ generated from the vertical acceleration sensor. The vertical acceleration signal $\alpha$ generated from the road surface condition detector 5 is transmitted to the controller 6 and applied to an internal control algorithm of the controller 6, so that it is converted into a vehicle body vertical speed signal and the controller 6 generates a damping force control signal suitable for current driving conditions of the vehicle by using the vehicle body vertical speed signal. In Fig. 1, only one variable damper 4 and only one spring 3 and only one wheel 2 are shown for the convenience of description although four variable dampers 4 and four springs 3 are mounted in a vehicle in correspondence to four wheels 2.

The variable damper 4 is provided with an actuator 7 (a changing mechanism for changing damping characteristics of the variable damper 4 in response to the damping force control signal), such as a solenoid valve or a step motor, and has more than one damping force characteristic curve. The damping force characteristic curves of the damper 4 can be switched in a plurality of steps or continuously by operating the actuator 7. The actuator 7 is operated according to the damping force control signal from the controller 6. Therefore, the variable damper 4 generates damping force according to the damping force control signal, so that it suppresses vibration of the vehicle body to improve ride comfort, and also suppresses variation of traction force of the vehicle to improve steering stability of the vehicle.

As mentioned above, the conventional electronically-controlled suspension apparatus controls the damping force of the variable damper 4 on the basis of (or in proportion to) a vertical speed of the vehicle body calculated by using the vertical acceleration signal $\alpha$ generated from the vertical acceleration sensor constituting the road surface condition detector 5.

The damping force characteristics (or the selection of damping force characteristic curve) of the variable damper 4 are changed with the vertical acceleration signal $\alpha$ (i.e., the vertical speed of the vehicle body), but the damping force of the variable damper 4 is determined by the selected damping force characteristic curve of the variable damper 4 and a current damper speed of the variable damper. Moreover, the conventional electronically-controlled suspension apparatus, which controls the damping force in proportion to the vertical speed of the vehicle body, may have a high level of the vertical speed of the vehicle body even when the damper speed is close to zero as shown in Fig. 2. In such a case, it generates a damping force control signal for obtaining a high level of the damping force. And if the magnitude (or absolute value) of the damper speed is increased, the damping force is abruptly changed, resulting in ride comfort deterioration.

Further, if a phase of the damper speed is opposed to that of a target damping force so that a negative(-) damping coefficient is required, the damping force may become unnecessarily hard due to a time delay generated during signal processing or a slow response time of an actuator, resulting in ride comfort deterioration.

US 5,979,855 that forms the closest prior art according to the preamble of claim 1, discloses to calculate a velocity ratio x'/y' of an absolute vertical movement velocity x' of the vehicle body relative to a relative vertical movement velocity y' of the vehicle body and to obtain a target damping coefficient C* in accordance with the velocity ratio x'/y' from a target coefficient table. On the one hand, the target damping coefficient C* is determined to increase in accordance with an increase of the velocity ratio x'/y' more than the predetermined positive small value $X'_o / y'_o$. One the other hand, the target damping coefficient C* is determined to a predetermined positive small value Cmin when the velocity ratio x'/y' is a negative value or less than a predetermined positive small value $x'_o / y'_o$.

EP 0566 091 A1 discloses to determine a ratio $\dot{Z}/\dot{Y}$ of the vertical velocity $\dot{Z}$ of the vehicle body and the relative velocity $\dot{Y}$ of the vehicle body in reference to the vehicle wheel and to determine a damping coefficient according to the ratio $\dot{Z}/\dot{Y}$.

The damping coefficient is determined in dependence of an acceleration $\ddot{Z}$ of the vehicle body such and, particularly, low and high frequency components of the acceleration $\ddot{Z}$.

US 2003/0160369 A1 discloses using wheel axle located accelerometers for suspension control systems.

It is, therefore, an object of the present invention is to provide an electronically-controlled suspension apparatus and damping force control method, which is capable of improving ride comfort and steering stability of a vehicle by using not only a vertical speed of a vehicle body but also a damper speed of a variable damper.

In accordance with still another aspect of the present invention, there is provided a damping force control method of an electronically-controlled suspension apparatus which has a variable damper installed between a vehicle body and a wheel axle and provided with an actuator, a first sensing device for detecting a vertical acceleration of the vehicle body, a second sensing device for detecting vertical movements of the vehicle body relative to the wheel axle, and which stores a soft damping force value and a maximum damping force value of the variable damper, the method including the steps of: calculating a vertical speed of the vehicle body by using the vertical acceleration detected by the first sensing device, and a damper speed of the variable damper by using the vertical movements detected by the second sensing device; calculating a target damping force by using the damper speed and the vertical speed of the vehicle body; determining whether a product of the target damping force and the damper speed is greater than 0; if the product of the target damping force and the damper speed is greater than 0, determining a first control command value in proportion to the target damping force and transmitting the determined first control command value to the actuator of the variable damper to change damping force characteristics of the variable damper; and if the product of the target damping force and the damper speed is equal to or less than 0, determining a second control command value for controlling the variable damper to be in a soft mode and transmitting the second control command value to the actuator of the variable damper.

In accordance with still another aspect of the invention, there is provided a damping force control method of an electronically-controlled suspension apparatus which has a variable damper installed between a vehicle body and a wheel axle and provided with an actuator, a vertical acceleration sensing device for detecting a vertical acceleration of the vehicle body and a wheel axle acceleration sensing device for detecting a vertical acceleration of the wheel axle, and which stores a soft damping force value and a maximum damping force value of the variable damper, the method including the steps of: calculating a vertical speed of the vehicle body and a vertical speed of the wheel axle by using the vertical acceleration of the vehicle body and the vertical acceleration of the wheel axle; calculating a damper speed of the variable damper by using the vertical speed of the vehicle body and the vertical speed of the wheel axle; calculating a target damping force by using the damper speed and the vertical speed of the vehicle body; determining whether a product of the target damping force and the damper speed is greater than 0; if the product of the target damping force and the damper speed is greater than 0, determining a first control command value in proportion to the target damping force and transmitting the determined first control command value to the actuator of the variable damper to change damping force characteristics of the variable damper; and if the product of the target damping force and the damper speed is equal to or less than 0, determining a second control command value for controlling the variable damper to be in a soft mode and transmitting the second control command value to the actuator.

The above objects and other features of the present invention will become apparent from the following description of the preferred embodiment given in conjunction with the accompanying drawings, in which:

Fig. 1 is a block diagram of a conventional electronically-controlled suspension apparatus;
Fig. 2 displays graphs illustrating a vertical speed of the vehicle body varying with time and a damper speed varying with time;
Fig. 3 presents a block diagram of an electronically-controlled suspension apparatus in accordance with a first preferred embodiment of the present invention;
Fig. 4 sets forth a plurality of damping force characteristic curves of a variable damper in damper speed-damping force coordinates; and
Fig. 5 illustrates a block diagram of an electronically-controlled suspension apparatus in accordance with a second preferred embodiment of the present invention.

Now, preferred embodiments of the present invention will be described in detail with reference to the accompanying drawings.

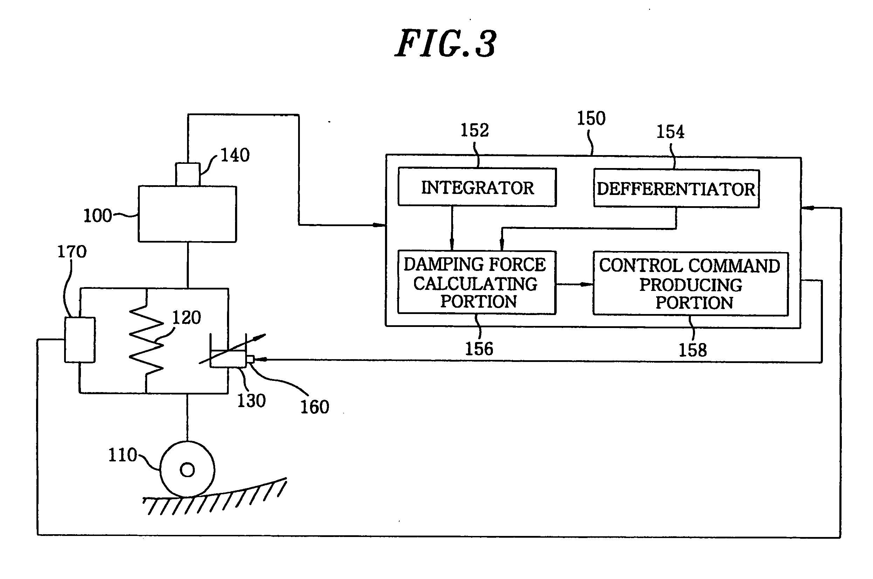

Fig. 3 is a block diagram of an electronically-controlled suspension apparatus in accordance with a first preferred embodiment of the present invention.

As shown in Fig. 3, the electronically-controlled suspension apparatus of the present invention includes a variable damper 130 installed between a vehicle body 100 and a wheel 110 (or wheel axle); and a second sensing device 170 for detecting vertical movements in up-and-down directions of the vehicle body 100 relative to the wheel 110, and generating a vehicle height signal indicating the detected vertical movements. A spring 120 is connected in parallel to the variable damper 130 and the second sensing device 170 at a location between the vehicle body 100 and the wheel 110, so that the spring 120 as well as the variable damper 130 supports the vehicle body 100. In Fig. 3, only one variable damper 130, only one second sensing device 170, only one spring 120 and only one wheel 110 are shown for the convenience of description although four variable dampers 130, four second sensing devices 170 and four springs 120 are mounted in a vehicle in correspondence to four wheels 2, respectively.

Further, the electronically-controlled suspension apparatus of the present invention includes a first sensing device 140 mounted to the vehicle body 100 and a controller 150. The first sensing device 140 detects a vertical acceleration of the vehicle body 100, and generates a vehicle body vertical acceleration signal indicating the detected vertical acceleration of the vehicle body 100. The controller 150 generates a control command value U for controlling a damping force of the variable damper 130 by using the vehicle body vertical acceleration signal generated from the first sensing device 140 and the vehicle height signal generated from the second sensing device 170.

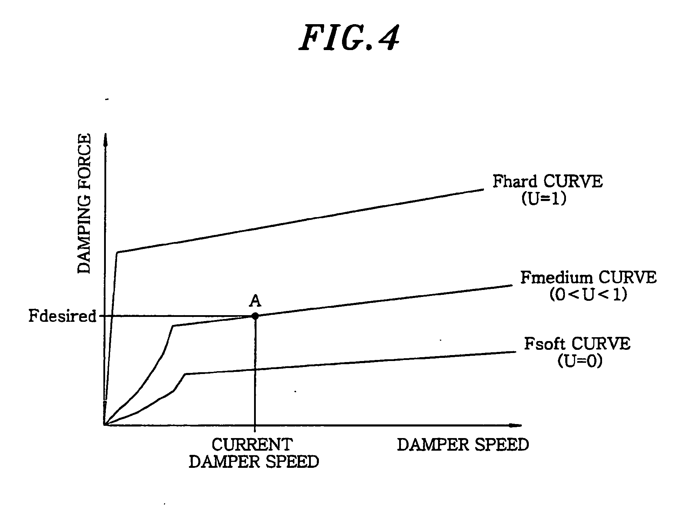

The variable damper 130 includes an actuator 160 which operates in response to the control command value U generated from the controller 150, and the damping force characteristics of the variable damper 130 are changed by the operation of the actuator 160. As shown in Fig. 4, the variable damper 130 has a plurality of damping force characteristic curves. Such damping force characteristic curves may be ones continuously existing between two curves $F_{soft}$ and $F_{hard}$, or may be a plurality of predetermined distinct curves such as $F_{soft}$, $F_{medium}$ and $F_{hard}$. If the control command value U is transmitted from the controller 150 to the actuator 160 of the variable damper 130, the actuator 160 is operated according to the control command value U, so that one of the damping force characteristic curves corresponding to the control command value U is set to the variable damper 130.

The first sensing device 140 is constituted by a vertical acceleration sensor, which detects the vertical acceleration of the vehicle body 100 and generates the vehicle body vertical acceleration signal indicating the detected vertical acceleration of the vehicle body 100. The vehicle body vertical acceleration signal is supplied to the controller 150. The second sensing device 170 installed between the vehicle body 100 and the wheel 110 is constituted by a vehicle height sensor, which detects vertical movements of the vehicle body 100 relative to the wheel 110 (or wheel axle) and generates the vehicle height signal indicating the detected vertical movements of the vehicle body 100 relative to the wheel 110. The vertical height signal generated from the second sensing device 170 is supplied to the controller 150.

The controller 150 includes an integrator 152 for integrating the vehicle body vertical acceleration signal received from the first sensing device 140 to calculate a vertical speed Zs of the vehicle body; a differentiator 154 for differentiating the vehicle height signal received from the second sensing device 170 to calculate a vehicle height speed; a damping force calculating portion 156 for calculating a target damping force $F_{desired}$ by using the vertical speed Zs of the vehicle body received from the integrator 152 and the vehicle height speed (i.e., a damper speed Zu of the variable damper 130) received from the differentiator 154; and a control command producing portion 158 for determining the control command value U corresponding to the target damping force $F_{desired}$, and transmitting the determined control command value U to the actuator 160 of the variable damper 130. As mentioned above, the controller 150 uses the vehicle height speed as the damper speed Zu, and stores a soft damping force value $F_{soft}$ and a maximum damping force value $F_{max}$, which are needed to calculate the control command value U. In this case, the soft damping force value $F_{soft}$ is one which is used when the variable damper 130 is controlled to be in a soft mode.

The damping force calculating portion 156 calculates the target damping force $F_{desired}$ using the following equation:

$$F_{desired} = K1 \times Zs + K2 \times Zu \qquad\qquad Eq. \ 1$$

where K1 and K2 are predetermined gain values and stored in the damping force calculating portion 156.

After the target damping force $F_{desired}$ is calculated by the damping force calculating portion 156, the control command producing portion 158 included in the controller 150 determines whether the target damping force $F_{desired}$ can be generated by a reaction force of the variable damper 130. In other words, the control command producing portion 158 determines whether the product of the target damping force $F_{desired}$ and the damper speed Zu is greater than 0. If the product of the target damping force $F_{desired}$ and the damper speed Zu is greater than 0, the control command producing portion 158 determines the control command value U by using the following equation:

$$U = (F_{desired} - F_{soft})/(F_{max} - F_{soft}) \qquad\qquad Eq. \ 2$$

Meanwhile, if the product of the target damping force $F_{desired}$ and the damper speed Zu is equal to or less than 0, the control command producing portion 158 determines the control command value U to be 0.

If the control command value U is determined to be 0, the actuator 160 is controlled to allow the damping force characteristic curve $F_{soft}$ in Fig. 4 to be set to the variable damper 130. If the control command value U is determined to be in the range between 0 and 1, the actuator 160 is controlled to allow the damping force characteristic curve $F_{medium}$ in Fig. 4 to be set to the variable damper 130. Also, if the control command value U is determined to be 1, the actuator 160 is controlled to allow the damping force characteristic curve $F_{hard}$ in Fig. 4 to be set to the variable damper 130.

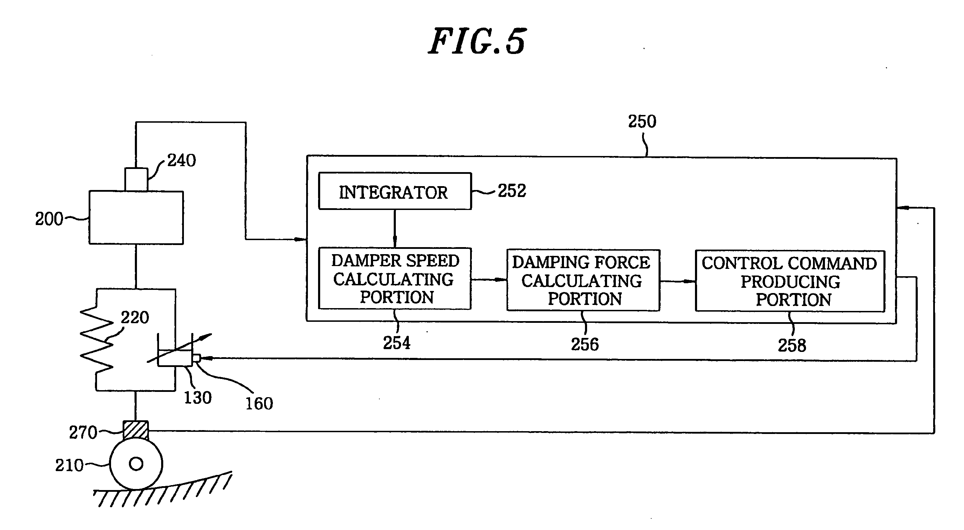

Fig. 5 is a block diagram of an electronically-controlled suspension apparatus in accordance with a second preferred embodiment of the present invention.

As shown in Fig. 5, the electronically-controlled suspension apparatus in accordance with the second preferred embodiment of the present invention obtains a damper speed of the variable damper 130 by employing a wheel axle acceleration sensing device 270 mounted to a wheel axle of a wheel 210 to detect a vertical acceleration of the wheel axle, instead of the second sensing device 170 (i.e., a vehicle height sensor) of the above-mentioned electronically-controlled suspension apparatus of Fig. 3.

The controller 250 includes an integrator 252 for integrating a vertical acceleration of the vehicle body 200 generated from a vertical acceleration sensing device 240 constituted by a vertical acceleration sensor so as to obtain a vertical speed Zs of the vehicle body 200, and integrating the vertical acceleration of the wheel axle detected by the wheel axle acceleration sensing device 270 so as to obtain a vertical speed Zg of the wheel axle; a damper speed calculating portion 254 for calculating a damper speed Zu by using the vertical speed Zg of the wheel axle and the vertical speed Zs of the vehicle body from the integrator 252; a damping force calculating portion 256 for calculating a target damping force $F_{desired}$ by using the damper speed Zu and the vertical speed Zs of the vehicle; and a control command producing portion 258 for determining a control command value U by using the target damping force $F_{desired}$, and transmitting the determined control command value U to the actuator 160 of the variable damper 130.

The damper speed calculating portion 254 calculates a damper speed Zu by using a difference between the vertical speed Zs of the vehicle body 200 and the vertical speed Zg of the wheel axle. The damping force calculating portion 256 calculates the target damping force $F_{desired}$ by using the following equation:

$$F_{desired} = K1 \times Zs + K2 \times (Zs - Zg)$$
$$= K1 \times Zs + K2 \times Zu \qquad \text{Eq. 3}$$

where K1 and K2 are predetermined gain values and stored in the damping force calculating portion 256.

After the target damping force $F_{desired}$ is calculated by the damping force calculating portion 256, the control command producing portion 258 included in the controller 250 determines whether the target damping force $F_{desired}$ can be generated by a reaction force of the variable damper 130. In other words, the control command producing portion 258 determines whether the product of the target damping force $F_{desired}$ and the damper speed Zu is greater than 0. If the product of the target damping force $F_{desired}$ and the damper speed Zu is greater than 0, the control command producing portion 258 determines the control command value U by using the above-mentioned Eq. 2, wherein a resultant value calculated by the above-mentioned Eq. 3 is used as the target damping force $F_{desired}$. Meanwhile, if the product of the target damping force $F_{desired}$ and the damper speed Zu is equal to or less than 0, the control command producing portion 258 determines the control command value U to be 0.

If the control command value U is determined to be 0, the actuator 160 is controlled to allow the damping force characteristic curve $F_{soft}$ in Fig. 4 to be set to the variable damper 130. If the control command value U is determined to be in the range between 0 and 1, the actuator 160 is controlled to allow the damping force characteristic curve $F_{medium}$ in Fig. 4 to be set to the variable damper 130. Also, if the control command value U is determined to be 1, the actuator 160 is controlled to allow the damping force characteristic curve $F_{hard}$ in Fig. 4 to be set to the variable damper 130.

According to the above-mentioned preferred embodiments of the present invention, the control command value U is determined by using Eq. 2 if the product of the target damping force $F_{desired}$ and the damper speed Zu is greater than 0. There is also proposed another method of determining the control command value U, in which the control command value U is determined to be one predetermined value corresponding to one of damping force characteristic curves passing an intersection point A (see Fig. 4) between a horizontal line indicating the target damping force $F_{desired}$ and a vertical line indicating a current damper speed of the variable damper 130 in damper speed-damping force coordinates. This method of determining the control command value U can provide the actuator 160 with the control command value U more suitable to current driving conditions of the vehicle.

As described above, in the electronically-controlled suspension apparatus and damping force control method in accordance with the present invention, since a damping force of a variable damper is controlled by using not only a vertical speed of the vehicle body but also a damper speed of the variable damper, the damping force of the variable damper can be controlled more appropriately in response to vehicle driving conditions, thus improving ride comfort and steering stability of a vehicle.

**Claims**

1. A damping force control method of an electronically-controlled suspension apparatus which has a variable damper (130) installed between a vehicle body (100) and a wheel axle (110) and provided with an actuate (160), a first sensing device (140) for detecting a vertical acceleration of the vehicle body (100), a second sensing device (170) for detecting vertical movements of the vehicle body (100) relative to the wheel axle (110), and which stores a soft damping force value and a maximum damping force value of the variable damper (130), the method comprising the steps of:

   calculating a vertical speed of the vehicle body by using the vertical acceleration detected by the first sensing device (140), and a damper speed of the variable damper (130) by using the vertical movements detected by the second sensing device (170); **characterized by**
   calculating a target damping force by using the damper speed and the vertical speed of the vehicle body (100);
   determining whether a product of the target damping force and the damper speed is greater than 0;
   if the product of the target damping force and the damper speed is greater than 0, determining a first control command value in proportion to the target damping force and transmitting the determined first control command value to the actuator (160) of the variable damper (130) to change damping force characteristics of the variable damper (130); and
   if the product of the target damping force and the damper speed is equal to or less than 0, determining a second control command value for controlling the variable damper (130) to be in a soft mode and transmitting the second control command value to the actuator (160) of the variable damper (130).

2. A damping force control method of an electronically-controlled suspension apparatus which has a variable damper (130) installed between a vehicle body (100) and a wheel axle (110) and provided with an actuator (160), a vertical acceleration sensing device (240) for detecting a vertical acceleration of the vehicle body (100) and a wheel axle acceleration sending device (270) for detecting a vertical acceleration of the wheel axle (110), and which stores a soft damping force value and a maximum damping force value of the variable damper (130), the method being **characterized by** comprising the steps of:

   calculating a vertical speed of the vehicle body (100) and a vertical speed of the wheel axle (110) by using the vertical acceleration of the vehicle body (100) and the vertical acceleration of the wheel axle (110);
   calculating a damper speed of the variable damper (130) by using the vertical speed of the vehicle body (100) and the vertical speed of the wheel axle (110);
   calculating a target damping force by using the damper speed and the vertical speed of the vehicle body (100);
   determining whether a product of the target damping force and the damper speed is greater than 0;
   if the product of the target damping force and the damper speed is greater than 0, determining a first control command value in proportion to the target damping force and transmitting the determined first control command value to the actuator (160) of the variable damper (130) to change damping force characteristics of the variable damper (130); and
   if the product of the target damping force and the damper speed is equal to or less than 0, determining a second control command value for controlling the variable damper (130) to be in a soft mode and transmitting the second control command value to the actuator (160).

3. The method of any one of claims 1 and 2, wherein the target damping force is calculated by a following equation:

$$F_{desired} = K1 \times Zs + K2 \times Zu$$

   where $F_{desired}$ represents the target damping force; K1 and K2 represent predetermined gain values; Zs represents the vertical speed of the vehicle body (100); and Zu, the damper speed of the variable damper (130).

4. The method of any one of claims 1 and 2, wherein the first control command value is determined by using a following equation:

$$U = (F_{desired} - F_{soft}) / (F_{max} - F_{soft})$$

where U represents the first control command value; $F_{desired}$, the target damping force; $F_{max}$, the maximum damping force value; and $F_{soft}$, the soft damping force value.

5. The method of any one of claims 1 and 2, wherein the first control command value is determined to be a predetermined value corresponding to one of damping force characteristic curves of the variable damper (130), the one of the damping force characteristic curves passing an intersection point between a horizontal line indicating the target damping force and a vertical line indicating a current damper speed of the variable damper (190) in damper speed-damping force coordinates.

**Patentansprüche**

1. Dämpfungskraftsteuerverfahren einer elektronisch gesteuerten Aufhängung, die einen zwischen einer Fahrzeugkarosserie (100) und einer Radachse (110) angebrachten und mit einem Aktor (160) versehenen variablen Stoßdämpfer (130), eine erste Erfassungsvorrichtung (140) zur Detektion einer vertikalen Beschleunigung der Fahrzeugkarosserie (100), eine zweite Erfassungsvorrichtung (170) zur Detektion vertikaler Bewegungen der Fahrzeugkarosserie (100) relativ zu der Radachse (110) umfasst und die einen Wert für eine schwache Dämpfungskraft und einen Wert für eine maximale Dämpfungskraft des variablen Stoßdämpfers (130) speichert, wobei das Verfahren die Schritte umfasst:

Berechnen einer vertikalen Geschwindigkeit der Fahrzeugkarosserie unter Verwendung der von der ersten Erfassungsvorrichtung (140) detektierten vertikalen Beschleunigung und einer Dämpfergeschwindigkeit des variablen Stoßdämpfers (130) unter Verwendung der von der zweiten Erfassungsvorrichtung (170) detektierten vertikalen Bewegungen;
**gekennzeichnet durch**
Berechnen einer Solldämpfungskraft unter Verwendung der Dämpfergeschwindigkeit und der vertikalen Geschwindigkeit der Fahrzeugkarosserie (100);
Ermitteln, ob ein Produkt der Solldämpfungskraft und der Dämpfergeschwindigkeit größer als 0 ist;
Ermitteln eines ersten Steuerbefehlswerts proportional zu der Solldämpfungskraft und Übertragen des ersten Steuerbefehlswerts zu dem Aktor (160) des variablen Stoßdämpfers (130), um die Dämpfungskraftcharakteristika des variablen Stoßdämpfers (130) zu ändern, wenn das Produkt der Solldämpfungskraft und der Dämpfergeschwindigkeit größer als 0 ist; und
Ermitteln eines zweiten Steuerbefehlswerts, um den variablen Stoßdämpfer (130) so zu steuern, dass es sich in einer weichen Betriebsart befindet, und Übertragen des zweiten Steuerbefehlswerts zu dem Aktor (160) des variablen Stoßdämpfers (130), wenn das Produkt der Solldämpfungskraft und der Dämpfergeschwindigkeit gleich oder kleiner als 0 ist.

2. Dämpfungskraftsteuerverfahren einer elektronisch gesteuerten Aufhängung, die einen zwischen einer Fahrzeugkarosserie (100) und einer Radachse (110) angebrachten und mit einem Aktor (160) versehenen variablen Stoßdämpfer (130), eine erste Erfassungsvorrichtung (140) zur Detektion einer vertikalen Beschleunigung der Fahrzeugkarosserie (100), eine zweite Erfassungsvorrichtung (170) zur Detektion vertikaler Bewegungen der Fahrzeugkarosserie (100) relativ zu der Radachse (110) umfasst und die einen Wert für eine schwache Dämpfungskraft und einen Wert für eine maximale Dämpfungskraft des variablen Dämpfers speichert, **dadurch gekennzeichnet, dass** das Verfahren die Schritte umfasst:

Berechnen einer vertikalen Geschwindigkeit der Fahrzeugkarosserie (100) und einer vertikalen Geschwindigkeit der Radachse (110) unter Verwendung der vertikalen Beschleunigung der Fahrzeugkarosserie (100) und der vertikalen Beschleunigung der Radachse (110);
Berechnen einer Dämpfergeschwindigkeit des variablen Stoßdämpfers (130) unter Verwendung der vertikalen Geschwindigkeit der Fahrzeugkarosserie (100) und der vertikalen Geschwindigkeit der Radachse (110);
Berechnen einer Solldämpfungskraft unter Verwendung der Dämpfergeschwindigkeit und der vertikalen Geschwindigkeit der Fahrzeugkarosserie (100);
Ermitteln, ob ein Produkt der Solldämpfungskraft und der Dämpfergeschwindigkeit größer als 0 ist;
Ermitteln eines ersten Steuerbefehlswerts proportional zu der Solldämpfungskraft und Übertragen des ersten Steuerbefehlswerts zu dem Aktor (160) des variablen Stoßdämpfers (130), um die Dämpfungskraftcharakteristika des variablen Stoßdämpfers (130) zu ändern, wenn das Produkt der Solldämpfungskraft und der Dämpfergeschwindigkeit größer als 0 ist; und
Ermitteln eines zweiten Steuerbefehlswerts, um den variablen Dämpfer (130) so zu steuern, dass er sich in einer weichen Betriebsart befindet, und Übertragen des zweiten Steuerbefehlswerts zu dem Aktor (160), wenn das Produkt der Solldämpfungskraft und der Dämpfergeschwindigkeit gleich oder kleiner als 0 ist.

**3.** Verfahren nach einem der Ansprüche 1 und 2, wobei die Solldämpfungskraft unter Verwendung der folgenden Gleichung berechnet wird:

$$F_{desired} = K1 \times Zs \times K2 \times Zu$$

wobei $F_{desired}$ die Solldämpfungskraft angibt; K1 und K2 vorbestimmte Verstärkungswerte angeben; Zs die vertikale Geschwindigkeit der Fahrzeugkarosserie (100) angibt; und Zu die Dämpfergeschwindigkeit des variablen Stoßdämpfers (130).

**4.** Verfahren nach einem der Ansprüche 1 und 2, wobei der erste Steuerbefehlswert unter Verwendung der folgenden Gleichung berechnet wird:

$$U = (F_{desired} - F_{soft}) / (F_{max} - F_{soft})$$

wobei U den ersten Steuerbefehlswerts angibt; Fdesired die Solldämpfungskraft; $F_{max}$ den Wert für die maximale Dämpfungskraft; und $F_{soft}$ den Wert für die schwache Dämpfungskraft.

**5.** Verfahren nach einem der Ansprüche 1 und 2, wobei der erste Steuerbefehlswert so festgelegt wird, dass er ein vorbestimmter Wert ist, der einer von Dämpfungskraftcharakteristikkurven des variablen Stoßdämpfers (130) entspricht, wobei die eine von Dämpfungskraftcharakteristikkurven durch einen Schnittpunkt zwischen einer horizontalen, die Solldämpfungskraft angebenden Linie und einer vertikalen, eine aktuelle Dämpfergeschwindigkeit des variablen Stoßdämpfers (130) angebende Linie in Dämpfergeschwindigkeits-Dämpfungskraft-Koordinaten hindurchgeht.

**Revendications**

**1.** Procédé de commande de la force d'amortissement d'un appareil de suspension commandé électroniquement qui présente un amortisseur (130) variable installé entre un corps de véhicule (100) et un essieu (110) et équipé d'un actionneur (160), un premier dispositif de détection (140) servant à détecter une accélération verticale du corps de véhicule (100), un second dispositif de détection (170) servant à détecter des mouvements verticaux du corps de véhicule (100) par rapport à l'essieu (110) et qui enregistre une valeur de force d'amortissement basse et une valeur de force d'amortissement maximale de l'amortisseur (130) variable, le procédé comprenant les étapes consistant à :

➢ calculer une vitesse verticale du corps de véhicule en utilisant l'accélération verticale détectée par le premier dispositif de détection (140), et une vitesse de l'amortisseur (130) variable en utilisant les mouvements verticaux détectés par le second dispositif de détection (170) ; **caractérisé par**

➢ le calcul d'une force d'amortissement cible en utilisant la vitesse de l'amortisseur et la vitesse verticale du corps de véhicule (100) ;
➢ la détermination de la supériorité à 0 d'un produit de la force d'amortissement cible et de la vitesse de l'amortisseur ;

➢ si le produit de la force d'amortissement cible et de la vitesse de l'amortisseur est supérieur à 0, la détermination d'une première valeur d'instruction de commande proportionnellement à la force d'amortissement cible et la transmission de la première valeur d'instruction de commande déterminée à l'actionneur (160) de l'amortisseur (130) variable pour modifier les caractéristiques de la force d'amortissement de l'amortisseur (130) variable ; et
➢ si le produit de la force d'amortissement cible et de la vitesse de l'amortisseur est égal ou est inférieur à 0, la détermination d'une seconde valeur d'instruction de commande pour commander l'amortisseur (130) variable afin qu'il soit en mode bas et la transmission de la seconde valeur d'instruction de commande à l'actionneur (160) de l'amortisseur (130) variable.

**2.** Procédé de commande de la force d'amortissement d'un appareil de suspension commandé électroniquement qui présente un amortisseur (130) variable installé entre un corps de véhicule (100) et un essieu (110) et équipé d'un actionneur (160), un dispositif de détection de l'accélération verticale (240) servant à détecter une accélération verticale du corps de véhicule (100) et un dispositif de détection de l'accélération de l'essieu (170) servant à détecter une accélération verticale de l'essieu (110), et qui enregistre une valeur de force d'amortissement basse et une valeur de force d'amortissement maximale de l'amortisseur (130) variable, le procédé étant **caractérisé en ce qu'**il comprend les étapes consistant à :

➢ calculer une vitesse verticale du corps de véhicule (100) et une vitesse verticale de l'essieu (110) en utilisant l'accélération verticale du corps de véhicule (100) et l'accélération verticale de l'essieu (110) ;
➢ calculer une vitesse de l'amortisseur (130) variable en utilisant la vitesse verticale du corps de véhicule (100) et la vitesse verticale de l'essieu (110) ;
➢ calculer une force d'amortissement cible en utilisant la vitesse de l'amortisseur et la vitesse verticale du corps de véhicule (100) ;
➢ déterminer si un produit de la force d'amortissement cible et de la vitesse de l'amortisseur est supérieur à 0 ;
➢ si le produit de la force d'amortissement cible et de la vitesse de l'amortisseur est supérieur à 0, déterminer une première valeur d'instruction de commande proportionnellement à la force d'amortissement cible et transmettre la première valeur d'instruction de commande déterminée à l'actionneur (160) de l'amortisseur (130) variable pour modifier les caractéristiques de la force d'amortissement de l'amortisseur (130) variable ; et
➢ si le produit de la force d'amortissement cible et de la vitesse de l'amortisseur est égal ou inférieur à 0, déterminer une seconde valeur d'instruction de commande pour commander l'amortisseur (130) variable afin qu'il soit en mode bas et transmettre la seconde valeur d'instruction de commande à l'actionneur (160).

**3.** Procédé selon l'une quelconque des revendications 1 et 2, dans lequel la force d'amortissement cible est calculée par une équation suivants :

$$F_{souhaitée} = K1 \times Zs + K2 \times Zu$$

dans laquelle $F_{souhaitée}$ représente la force d'amortissement cible ; K1 et K2 représentent des valeurs de gain prédéterminées ; Zs représente la vitesse verticale du corps de véhicule (100) ; et Zu, la vitesse de l'amortisseur (130) variable.

**4.** Procédé selon l'une quelconque des revendications 1 et 2, dans lequel la première valeur d'instruction de commande est déterminée en utilisant une équation suivants :

$$U = (F_{souhaitée} - F_{basse})/(F_{max} - F_{basse})$$

dans laquelle U représente la première valeur d'instruction de commande ; $F_{souhaitée}$, la force d'amortissement cible ; $F_{max}$, la valeur de la force d'amortissement maximale ; et $F_{basse}$, la valeur de la force d'amortissement basse.

**5.** Procédé selon l'une quelconque des revendications 1 et 2, dans lequel la première valeur d'instruction de commande est déterminée de sorte à être une valeur prédéterminée correspondant à l'une des courbes caractéristiques de la force d'amortissement de l'amortisseur (130) variable, cette courbe caractéristique de la force d'amortissement passant un point d'intersection entre une ligne horizontale indiquant la force d'amortissement cible et une ligne verticale indiquant une vitesse actuelle de l'amortisseur (130) variable dans des coordonnées de force d'amortissement et de vitesse de l'amortisseur.

# *FIG.1*
## *(PRIOR ART)*

# *FIG.2*

# FIG.3

INTEGRATOR    152    150    DEFFERENTIATOR    154

DAMPING FORCE CALCULATING PORTION    156

CONTROL COMMAND PRODUCING PORTION    158

EP 1 535 767 B1

# FIG.4

DAMPING FORCE

Fhard CURVE
(U=1)

Fmedium CURVE
(0 < U < 1)

Fdesired

A

Fsoft CURVE
(U=0)

CURRENT
DAMPER SPEED

DAMPER SPEED

12

## FIG.5

EP 1 535 767 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5979855 A
- EP 0566091 A1
- US 20030160369 A1